# EUROPÄISCHE PATENTANMELDUNG

(11) **EP 4 293 451 A1**
(43) Veröffentlichungstag der Anmeldung: **20.12.2023**
(21) Anmeldenummer: 22178574.4
(22) Anmeldetag: 13.06.2022
(51) Int. Cl.: G05B 19/418, G05B 23/02, G05B 13/04, G05B 17/02

(54) **STEUERN EINES START- UND/ODER ABSCHALTVORGANGS UND/ODER LASTWECHSELS EINER TECHNISCHEN ANLAGE**

(71) Anmelder: Siemens Aktiengesellschaft, 80333 München (DE)
(72) Erfinder: Röhrl, Manuel, 81673 München (DE); Runkler, Thomas, 81929 München (DE)
(74) Vertreter: Siemens Patent Attorneys

(57) **Zusammenfassung**

Die Erfindung betrifft eine Vorrichtung (100) und ein computerimplementiertes Verfahren zum Steuern eines Start- und/oder Abschaltvorgangs und/oder Lastwechsels einer technischen Anlage (TS). Die Vorrichtung umfasst:
- eine Schnittstelle (101), die derart eingerichtet ist, ein computergestütztes, dynamisches Modell (CM) bereitzustellen, wobei das computergestützte, dynamische Modell ein physikalisches, dynamisches Simulationsmodell (SIM) und ein datengetriebenes Modell (NN) umfasst,

wobei das physikalische, dynamische Simulationsmodell lediglich einen Teilaspekt dynamischer Prozesse beim Start- und/oder Abschaltvorgang und/oder Lastwechsel der technischen Anlage modelliert und das datengetriebene Modell die übrigen Teilaspekte der dynamischen Prozesse modelliert,
und wobei das computergestützte, dynamische Modell unter Verwendung von zeitabhängigen Prozessgrößen der technischen Anlage darauf trainiert ist, in Abhängigkeit einer ersten Prozessgröße zweite Prozessgrößen der technischen Anlage zu reproduzieren,

- einen Sensor (102), der derart eingerichtet ist, eine Prozessgröße der technischen Anlage zu erfassen,
- ein Prognosemodul (103), das derart eingerichtet ist, weitere Prozessgrößen der technischen Anlage in Abhängigkeit der erfassten Prozessgröße durch Ausführen des computergestützten, dynamischen Modells zu prognostizieren,
und
- ein Ausgabemodul (104), das derart eingerichtet ist, die prognostizierten Prozessgrößen zum Steuern eines Start- und/oder Abschaltvorgangs und/oder Lastwechsels der technischen Anlage auszugeben.

## Beschreibung

Die Erfindung betrifft eine Vorrichtung, ein computerimplementiertes Verfahren und ein Computerprogrammprodukt zum Steuern eines Start- und/oder Abschaltvorgangs und/oder Lastwechsels einer technischen Anlage, sowie ein computerimplementiertes Verfahren und ein Computerprogrammprodukt zum Trainieren eines computergestützten, dynamischen Modells, das zum Steuern eines Start- und/oder Abschaltvorgangs und/oder Lastwechsels einer technischen Anlage geeignet ist.

Dynamische Prozesse, wie z.B. Start- und/oder Abschaltvorgänge und/oder Lastwechsel, in komplexen technischen Systemen, wie z.B. Prozessanlagen, sind oft schwierig computergestützt zu modellieren. Das liegt beispielsweise daran, dass die technischen Systeme und die auftretenden physikalischen Phänomene oft nicht ausreichend verstanden sind. Außerdem sind die benötigten mathematischen Gleichungen zur Modellierung der Systeme oft sehr komplex. Die Erstellung von dynamischen Computersimulationsmodellen stellt daher oft einen großen manuellen Aufwand dar und/oder benötigt viel Expertenwissen, so dass dies wirtschaftlich oft wenig rentabel ist. Vorteile von Computersimulationen, wie z.B. eine virtuelle Inbetriebnahme oder virtuelle Sensorik, bleiben dann oft ungenutzt.

Es ist daher eine Aufgabe der Erfindung, die Generierung eines computergestütztes Simulationsmodells für dynamische Prozesse einer technischen Anlage zu vereinfachen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt. Gemäß einem ersten Aspekt betrifft die Erfindung eine Vorrichtung zum Steuern eines Start- und/oder Abschaltvorgangs und/oder Lastwechsels einer technischen Anlage, umfassend:
- eine Schnittstelle, die derart eingerichtet ist, ein computergestütztes, dynamisches Modell bereitzustellen, wobei das computergestützte, dynamische Modell ein physikalisches, dynamisches Simulationsmodell und ein datengetriebenes Modell umfasst,
   wobei das physikalische, dynamische Simulationsmodell lediglich einen Teilaspekt dynamischer Prozesse beim Start- und/oder Abschaltvorgang und/oder Lastwechsel der technischen Anlage modelliert und das datengetriebene Modell die übrigen Teilaspekte der dynamischen Prozesse beim Start- und/oder Abschaltvorgang und/oder Lastwechsel modelliert,
   und wobei das computergestützte, dynamische Modell unter Verwendung von zeitabhängigen Prozessgrößen der technischen Anlage darauf trainiert ist, in Abhängigkeit einer ersten Prozessgröße der technischen Anlage zweite Prozessgrößen der technischen Anlage zu reproduzieren,
- einen Sensor, der derart eingerichtet ist, eine Prozessgröße der technischen Anlage zu erfassen,
- ein Prognosemodul, das derart eingerichtet ist, weitere Prozessgrößen der technischen Anlage in Abhängigkeit der erfassten Prozessgröße durch Ausführen des computergestützten, dynamischen Modells zu prognostizieren,
   und
- ein Ausgabemodul, das derart eingerichtet ist, die prognostizierten Prozessgrößen zum Steuern eines Start- und/oder Abschaltvorgangs und/oder Lastwechsels der technischen Anlage auszugeben.

Gemäß einem zweiten Aspekt betrifft die Erfindung ein computerimplementiertes Verfahren zum Steuern eines Start- und/oder Abschaltvorgangs und/oder Lastwechsels einer technischen Anlage:
- Bereitstellen eines computergestützten, dynamischen Modells, wobei das computergestützte, dynamische Modell ein physikalisches, dynamisches Simulationsmodell und ein datengetriebenes Modell umfasst,
   wobei das physikalische, dynamische Simulationsmodell lediglich einen Teilaspekt dynamischer Prozesse beim Start- und/oder Abschaltvorgang und/oder beim Lastwechsel der technischen Anlage modelliert und das datengetriebene Modell die übrigen Teilaspekte der dynamischen Prozesse beim Start- und/oder Abschaltvorgang und/oder Lastwechsel modelliert, und wobei das computergestützte, dynamische Modell unter Verwendung von zeitabhängigen Betriebsdaten der technischen Anlage darauf trainiert ist, in Abhängigkeit einer ersten Prozessgröße der technischen Anlage zweite Prozessgrößen der technischen Anlage zu reproduzieren,
- Erfassen einer Prozessgröße der technischen Anlage,
- Prognostizieren von weiteren Prozessgrößen der technischen Anlage in Abhängigkeit der erfassten Prozessgröße durch Ausführen des computergestützten, dynamischen Modells,
   und
- Ausgeben der prognostizierten Prozessgrößen zum Steuern eines Start- und/oder Abschaltvorgangs und/oder Lastwechsels der technischen Anlage.

Es ist ein Vorteil der vorliegenden Erfindung, dass ein hybrides Computersimulationsmodell zum Prognostizieren von Prozessgrößen bei einem dynamischen Prozess einer technischen Anlage bereitgestellt wird, das eine höhere Zuverlässigkeit und Genauigkeit in der Prognose liefert als herkömmliche Verfahren. Damit wird die Steuerung der technischen Anlage verbessert. Der Modellierungsaufwand im Vergleich zu reinen physikalischen Simulationsmodellen ist geringer, da für die Generierung des hybriden computergestützten, dynamischen Modells Messdaten genutzt werden. Anderseits werden weniger Messdaten benötigt als für reine datengetriebene Modelle. Expertenwissen fließt vorteilhaft in Form des physikalischen, dynamischen Simulationsmodells ein. Das computergestützte, dynamische Modell kann außerdem einfach eingesetzt und in den Steuerungsprozess der technischen Anlage integriert werden.

In einer Ausführungsform der Erfindung kann das dynamische Modell als Functional-Mock-up-Interface-Modell (FMU) ausgebildet sein. Insbesondere kann das dynamische Modell in einem standardisierten Format bereitgestellt werden, so dass es als Blackbox-Modell genutzt werden kann.

In einer weiteren Ausführungsform der Erfindung kann das datengetriebene Modell als ein künstliches neuronales Netz ausgebildet sein.

In einer weiteren Ausführungsform der Erfindung kann das computergestützte, dynamische Modell, insbesondere das datengetriebene Modell, durch Minimierung einer Verlustfunktion trainiert sein.

Vorzugsweise werden das physikalische, dynamische Simulationsmodell und das datengetriebene Modell gemeinsam trainiert.

In einer weiteren Ausführungsform der Erfindung kann das computergestützte, dynamische Modell mittels eines stochastischen Gradientenabstiegsverfahrens mit Backpropagation trainiert sein.

Dazu sind das physikalische, dynamische Simulationsmodell, das datengetriebene Modell und ein gemeinsamer Solver vorzugsweise differenzierbar.

In einer weiteren Ausführungsform der Erfindung können Gradienten des datengetriebenen Modells durch automatisches Differenzieren ermitteln werden.

Gemäß einem weiteren Aspekt betrifft die Erfindung ein computerimplementiertes Verfahren zum Trainieren eines computergestützten, dynamischen Modells, das zum Steuern eines Start- und/oder Abschaltvorgangs und/oder Lastwechsels einer technischen Anlage geeignet ist, umfassend die Verfahrensschritte:
- Bereitstellen eines computergestützten, dynamischen Modells, wobei das computergestützte, dynamische Modell ein physikalisches, dynamisches Simulationsmodell und ein datengetriebenes Modell umfasst, wobei das physikalische, dynamische Simulationsmodell lediglich einen Teilaspekt dynamischer Prozesse beim Start- und/oder Abschaltvorgang und/oder beim Lastwechsel der technischen Anlage modelliert und das datengetriebene Modell die übrigen Teilaspekte der dynamischen Prozesse beim Start- und/oder Abschaltvorgang und/oder Lastwechsel modelliert,
- Trainieren des computergestützten, dynamischen Modells, wobei iterativ
   - eine prognostizierte Prozessgröße der technischen Anlage durch Ausführen des computergestützten, dynamischen Modells in Abhängigkeit einer ersten Prozessgröße zu einem vorgegebenen Zeitpunkt ermittelt wird,
   - eine Abweichung der prognostizierten Prozessgrößen von einer entsprechenden, gemessenen Prozessgröße der technischen Anlage ermittelt wird,
      und
   - Parameter des datengetriebenen Modells und/oder des physikalischen, dynamischen Simulationsmodells derart konfiguriert werden, dass die Abweichung der prognostizierten Prozessgröße von der gemessenen Prozessgröße minimiert wird,
      und
- Bereitstellen des derart konfigurierten computergestützten, dynamischen Modells zum Steuern der technischen Anlage.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der Erfindung sind in den Zeichnungen beispielhaft dargestellt und werden anhand der nachfolgenden Beschreibung näher erläutert. Es zeigen:
- Fig. 1:: ein Ausführungsbeispiel einer erfindungsgemäßen Vorrichtung zum Steuern eines Start- und/oder Abschaltvorgangs und/oder Lastwechsels einer technischen Anlage;
- Fig. 2: ein Ausführungsbeispiel eines computergestützten Verfahrens zum Steuern eines Start- und/oder Abschaltvorgangs und/oder Lastwechsels einer technischen Anlage;
- Fig. 3: ein erstes Ausführungsbeispiel eines computergestützten Verfahrens zum Trainieren eines computergestützten, dynamischen Modells, das zum Steuern eines Start- und/oder Abschaltvorgangs und/oder Lastwechsels einer technischen Anlage geeignet ist; und
- Fig. 4: ein zweites Ausführungsbeispiel eines computergestützten Verfahrens zum Trainieren eines computergestützten, dynamischen Modells, das zum Steuern eines Start- und/oder Abschaltvorgangs und/oder Lastwechsels einer technischen Anlage geeignet ist.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

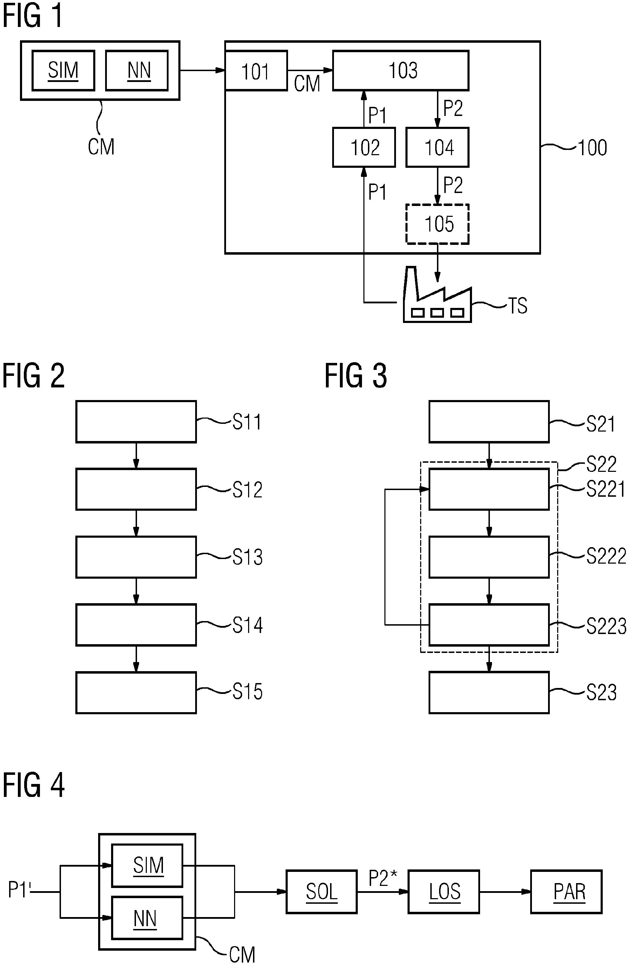

Figur 1 zeigt ein erstes Ausführungsbeispiel einer erfindungsgemäßen Vorrichtung 100 zum Steuern eines Start- und/oder Abschaltvorgangs und/oder Lastwechsels einer technischen Anlage TS.

Eine technische Anlage TS kann beispielsweise ein Gas- und Dampfturbinen-Kraftwerk/eine Gas- und Dampfturbinen-Anlage, eine Produktionsanlage sein, eine Anlage für einen verfahrenstechnischer Prozess wie z.B. eine Produktionsanlage für chemische oder pharmazeutische Produkte, Stahlherstellung, Herstellung von Papier oder Zellstoff, oder Kunststoffherstellung.

Die Vorrichtung 100 umfasst eine Schnittstelle 101, mindestens einen Sensor 102, ein Prognosemodul 103 und ein Ausgabemodul 104. Weiter kann die Vorrichtung 100 noch ein Steuermodul 105, das zum Steuern der technischen Anlage TS geeignet ist, umfassen und/oder mit einem solchen Steuermodul 105 gekoppelt sein. Außerdem kann die Vorrichtung 100 mindestens einen Prozessor und/oder Speicher/Speichereinheit umfassen.

Die Schnittstelle 101 ist derart eingerichtet, ein computergestütztes, dynamisches Modell CM bereitzustellen. Das computergestützte, dynamische Modell CM umfasst ein physikalisches, dynamisches Simulationsmodell SIM und ein datengetriebenes Modell NN, wie z.B. ein künstliches neuronales Netz. Das computergestützte, dynamische Modell CM ist darauf optimiert, in Abhängigkeit einer vorgegebenen Prozessgröße der technischen Anlage TS als Eingabegröße, mindestens eine weitere Prozessgröße der technischen Anlage TS zu bestimmen/auszugeben, die zum Steuern der technischen Anlage genutzt werden kann.

Das physikalische, dynamische Simulationsmodell SIM ist dazu eingerichtet, lediglich einen Teilaspekt dynamischer Prozesse beim Start- und/oder Abschaltvorgang und/oder Lastwechsel der technischen Anlage abzubilden. Das datengetriebene Modell NN ist dazu eingerichtet, die übrigen Teilaspekte der dynamischen Prozesse beim Start- und/oder Abschaltvorgang und/oder Lastwechsel abzubilden. Beispielsweise ist das physikalische, dynamische Simulationsmodell SIM ein Functional-Mock-up-Interface-Modell (FMU), das die dynamischen Prozesse hinreichend abbildet. Weitere Effekte und/oder Teilaspekte der dynamischen Prozesse, die durch das FMU-Modell nicht modelliert werden, werden durch das datengetriebene Modell NN modelliert.

Das computergestützte, dynamische Modell CM ist unter Verwendung von zeitabhängigen Prozessgrößen, d.h. Messdaten, der technischen Anlage darauf trainiert, in Abhängigkeit einer ersten Prozessgröße, wie z.B. einem Leistungswert, der technischen Anlage zweite Prozessgrößen, wie z.B. Temperatur, der technischen Anlage zu reproduzieren. Insbesondere ist das computergestützte, dynamische Modell durch Minimierung einer Verlustfunktion, wie z.B. mittlere quadratische Differenz, trainiert. Unter Training des computergestützten, dynamischen Modells CM kann insbesondere eine Anpassung der Parameter des datengetriebenen Modells NN, wie z.B. Gewichte eines künstlichen neuronalen Netzes, verstanden werden. Es ist auch möglich beim Training Parameter des computergestützten, dynamischen Simulationsmodells SIM anzupassen.

Der mindestens eine Sensor 102 ist dazu eingerichtet, mindestens eine Prozessgröße P1 zu einem vorgegebenen Zeitpunkt der technischen Anlage zu erfassen. Der Sensor 102 kann sich beispielsweise an oder in der technischen Anlage befinden. Beispielsweise handelt es sich hierbei um einen Leistungsmesser, mit dem ein Leistungswert P1 der technischen Anlage zu einem vorgegebenen Zeitpunkt gemessen werden kann. Die erfasste Prozessgröße P1 wird an das Prognosemodul 103 übermittelt. Die Vorrichtung 100 bzw. die technische Anlage TS können noch weitere Sensoren umfassen, die weitere Messwerte als Eingangsgrößen und/oder Randbedingungen für das Prognosemodul liefern.

Das Prognosemodul 103 ist dazu eingerichtet, mindestens eine weitere Prozessgröße P2 der technischen Anlage in Abhängigkeit der erfassten Prozessgröße P1 durch Ausführen des computergestützten, dynamischen Modells CM zu bestimmen und auszugeben. Das Prognosemodul 103 bestimmt also mittels des computergestützten, dynamischen Modells CM und in Abhängigkeit der erfassten Prozessgröße P1 mindestens eine weitere Prozessgröße P2. Dabei können außerdem noch weitere Prozessgrößen als Eingangsgrößen und/oder Randbedingungen vom Prognosemodul beim Bestimmen mindestens einer weiteren Prozessgröße P2 berücksichtigt werden. Da das computergestützte, dynamische Modell CM darauf trainiert ist, in Abhängigkeit einer vorgegebenen ersten Prozessgröße mindestens eine zweite Prozessgröße zu ermitteln, kann derart mindestens eine weitere Prozessgröße der technischen Anlage prognostiziert werden.

Das Ausgabemodul 104 ist derart eingerichtet, die prognostizierte Prozessgröße P2 zum Steuern des Start- und/oder Abschaltvorgangs und/oder Lastwechsels der technischen Anlage TS auszugeben. Beispielsweise kann das Ausgabemodul 104 mit dem Steuermodul 105 gekoppelt sein, wobei das Steuermodul 105 die technische Anlage in Abhängigkeit der übermittelten Prozessgröße P2 steuert. Durch die verbesserte Steuerung kann das Hoch- oder Herunterfahren oder der Lastwechsel mit besserer Energieeffizienz, Wirkungsgrad, geringerem Schadstoffausstoß, oder besserer Einhaltung von Randbedingungen, wie z.B. Grenztemperaturen und -drücke, erfolgen. Bei chemischen oder pharmazeutischen Produktionsanlagen kann die Anlage aufgrund der höheren Modellgüte besser im Sollbereich betrieben werden, was insbesondere zu einer höheren Produktqualität führt.

Figur 2 zeigt ein Ausführungsbeispiel eines computerimplementierten Verfahrens zum Steuern eines Start- und/oder Abschaltvorgangs und/oder Lastwechsels einer technischen Anlage mit den folgenden Verfahrensschritten:
Im ersten Schritt S11 wird ein computergestütztes, dynamisches Modell bereitgestellt, wie z.B. von einem Speicher eingelesen. Das computergestützte, dynamische Modell besteht vorzugsweise aus einem physikalischen, dynamischen Simulationsmodell und einem datengetriebenen Modell. Das computergestützte, dynamische Modell ist unter Verwendung von zeitabhängigen Betriebsdaten der technischen Anlage darauf trainiert, in Abhängigkeit einer ersten Prozessgröße der technischen Anlage zweite Prozessgrößen der technischen Anlage zu reproduzieren.

Das physikalische, dynamische Simulationsmodell modelliert lediglich einen Teilaspekt dynamischer Prozesse beim Start- und/oder Abschaltvorgang und/oder beim Lastwechsel der technischen Anlage. Das datengetriebene Modell modelliert die übrigen Teilaspekte der dynamischen Prozesse beim Start- und/oder Abschaltvorgang und/oder Lastwechsel.

Im nächsten Schritt S12 wird eine Prozessgröße der technischen Anlage eingelesen. Die Prozessgröße kann beispielsweise mittels eines Sensors erfasst werden.

Im nächsten Schritt S13 werden weitere Prozessgrößen der technischen Anlage in Abhängigkeit der erfassten Prozessgröße durch Ausführen des computergestützten, dynamischen Modells prognostiziert. In anderen Worten, das computergestützte, dynamische Modell wird unter Berücksichtigung der erfassten Prozessgröße als Eingangsgröße ausgeführt, um weitere Prozessgrößen zu bestimmen.

Im nächsten Schritt S14 werden die prognostizierten Prozessgrößen zum Steuern eines Start- und/oder Abschaltvorgangs und/oder Lastwechsels der technischen Anlage ausgegeben.

Im nächsten Schritt S15 wird der Start- und/oder Abschaltvorgangs und/oder Lastwechsels der technischen Anlage in Abhängigkeit der prognostizierten Prozessgröße gesteuert.

Figur 3 zeigt ein erstes Ausführungsbeispiel eines computergestützten Verfahrens zum Trainieren eines computergestützten, dynamischen Modells, das zum Steuern eines Start- und/oder Abschaltvorgangs und/oder Lastwechsels einer technischen Anlage geeignet ist.

Das Trainingsverfahren umfasst folgende Verfahrensschritte:
Im ersten Schritt S21 wird ein computergestütztes, dynamisches Modell bereitgestellt, wie z.B. von einem Speicher eingelesen. Das computergestützte, dynamische Modell umfasst ein physikalisches, dynamisches Simulationsmodell und ein datengetriebenes Modell. Dabei ist das physikalische, dynamische Simulationsmodell eingerichtet, lediglich einen Teil der dynamischen Prozesse beim Start- und/oder Abschaltvorgang und/oder beim Lastwechsel der technischen Anlage zu modellieren und das datengetriebene Modell ist eingerichtet, die übrigen Teile der dynamischen Prozesse beim Start- und/oder Abschaltvorgang und/oder Lastwechsel, die nicht vom physikalischen, dynamischen Simulationsmodell abgebildet werden, zu modellieren.

Im nächsten Schritt S22 wird das computergestützte, dynamische Modell mittels zeitabhängiger Betriebsdaten der technischen Anlage trainiert. Das Training erfolgt vorzugsweise iterativ pro Zeitschritt, d.h. die Teilschritte S221-S223 werden iterativ durchgeführt.

Im ersten Teilschritt S221 wird mindestens eine Prozessgröße der technischen Anlage durch Ausführen des computergestützten, dynamischen Modells in Abhängigkeit einer vorgegebenen, ersten Prozessgröße zu einem vorgegebenen Zeitpunkt prognostiziert.

Im nächsten Teilschritt S222 wird eine Abweichung der prognostizierten Prozessgröße von einer entsprechenden, gemessenen Prozessgröße der technischen Anlage zu einem entsprechenden Zeitpunkt ermittelt. Die entsprechenden gemessenen Prozessgrößen werden vorzugsweise vorab ermittelt und eingelesen. Es wird folglich ein für einen vorgegebenen Zeitpunkt prognostizierter Prozessgrößenwert mit einem gemessenen Prozessgrößenwert verglichen, der zu einem entsprechenden Zeitpunkt (des dynamischen Prozesses) mittels eines Sensors an oder in der Anlage gemessen wurde.

Insbesondere werden Trainingsdaten, die für einen jeweiligen Zeitschritt mindestens eine erste Prozessgröße als Eingabewert und mindestens eine zweite Prozessgröße als Ausgabewert umfassen, bereitgestellt und für diese beiden ersten Teilschritte S221 und S222 genutzt.

Als nächster Teilschritt S223 wird mindestens ein Parameter des datengetriebenen Modells und/oder des physikalischen, dynamischen Simulationsmodells derart konfiguriert, dass die Abweichung der prognostizierten Prozessgröße von der gemessenen Prozessgröße minimiert wird.

Beispielsweise handelt es sich bei dem datengetriebenen Modell um ein künstliches neuronales Netz. Beim Teilschritt S223 können beispielsweise Gewichte des neuronalen Netzes so angepasst werden, dass die Abweichung zwischen der prognostizierten und der gemessenen Prozessgröße minimiert wird.

Der Schritt S22 bzw. die Teilschritte S221-S223 werden vorzugsweise so oft iterativ durchgeführt, bis ein Optimierungskriterium erfüllt ist bzw. bis die Minimierung in Teilschritt S223 eine vorgegebene Schwelle unter- bzw. überschritten hat.

Anschließend, bei Schritt S23, wird das des derart konfigurierten computergestützten, dynamischen Modells zum Steuern der technischen Anlage ausgegeben.

Figur 4 zeigt ein zweites Ausführungsbeispiel eines computergestützten Verfahrens zum Trainieren eines computergestützten, dynamischen Modells CM, das zum Steuern eines Start- und/oder Abschaltvorgangs und/oder Lastwechsels einer technischen Anlage geeignet ist. Das derart trainierte computergestützte, dynamische Modell kann beispielsweise in einem Prozess wir beispielhaft anhand Figur 2 erläutert genutzt werden.

Das computergestützte, dynamische Modell CM besteht vorzugsweise aus einem FMU-Modell SIM und einem datengetriebenen Modell NN. Diese beiden Modelle werden gemeinsam mittels Trainingsdaten trainiert, so dass das computergestützte, dynamische Modell CM optimierte Prozessgrößen zum Steuern der technischen Anlage ausgibt. Das computergestützte, dynamische Modell CM kann somit dynamische Prozesse in der technischen Anlage akkurat abbilden.

Dazu werden Zeitreihendaten von Prozessgrößen als Trainingsdaten zum Trainieren des computergestützten, dynamischen Modells CM bereitgestellt.

Das computergestützte, dynamische Modell CM wird durch Minimierung einer Verlustfunktion von prognostizierten und gemessenen Werten trainiert. Das Optimierungsproblem wird mittels eines stochastischen Gradientenabstiegsverfahrens mit Backpropagation gelöst. Dafür ist das FMU-Modell, das datengetriebene Modell und der Solver vorzugsweise differenzierbar. Die Gradienten des datengetriebenen Modells und des Solvers können durch automatisches Differenzieren bestimmt werden. Für das FMU-Modell können die Gradienten entweder bereits vorbestimmt und derart bereitgestellt werden oder sie werden mittels einer Finite-Differenzen-Methode bestimmt.

Der Trainingsprozess ist in Figur 4 dargestellt. Das Training erfolgt iterativ pro vorgegebenen Zeitschritt für einen vorgegebenen Zeitraum. Für das Training werden Trainingsdaten bereitgestellt, die für jeden zu betrachtenden Zeitschritt mindestens eine Eingangsgröße und eine Ausgangsgröße umfassen, wobei die Eingangs- und Ausgangsgrößen gemessene Prozessgrößen eines dynamischen Prozesses der technischen Anlage sind. Das computergestützte, dynamische Modell CM wird darauf trainiert, in Abhängigkeit einer Eingangsgröße P1' eine Ausgangsgröße zu reproduzieren.

Bei einem Trainingsschritt (pro Zeitschritt) wird das computergestützte, dynamische Modell CM in Abhängigkeit der Eingangsgröße P1', wie z.B. einem Leistungswert, ausgeführt und mit dem Solver SOL gelöst, und eine Ausgangsgröße P2* ausgegeben. Diese ermittelte Ausgangsgröße P2* wird mit einer entsprechenden Größe aus den Trainingsdaten verglichen und eine Abweichung bestimmt. Anschließend werden Parameter des datengetriebenen Modells NN und/oder des FMU-Modells SIM angepasst, so dass diese Abweichung minimiert wird. Es wird eine Verlustfunktion LOS minimiert. Die angepassten, optimierten Parameter PAR des computergestützten, dynamischen Modells CM werden anschließend ausgegeben. Das derart optimierte computergestützte, dynamische Modell CM kann anschließend zum Steuern der technischen Anlage eingesetzt werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Vorrichtung (100) zum Steuern eines Start- und/oder Abschaltvorgangs und/oder Lastwechsels einer technischen Anlage (TS), umfassend:
- eine Schnittstelle (101), die derart eingerichtet ist, ein computergestütztes, dynamisches Modell (CM) bereitzustellen, wobei das computergestützte, dynamische Modell (CM) ein physikalisches, dynamisches Simulationsmodell (SIM) und ein datengetriebenes Modell (NN) umfasst,
wobei das physikalische, dynamische Simulationsmodell (SIM) lediglich einen Teilaspekt dynamischer Prozesse beim Start- und/oder Abschaltvorgang und/oder Lastwechsel der technischen Anlage modelliert und das datengetriebene Modell (NN) die übrigen Teilaspekte der dynamischen Prozesse beim Start- und/oder Abschaltvorgang und/oder Lastwechsel modelliert, und wobei das computergestützte, dynamische Modell (CM) unter Verwendung von zeitabhängigen Prozessgrößen der technischen Anlage darauf trainiert ist, in Abhängigkeit einer ersten Prozessgröße der technischen Anlage zweite Prozessgrößen der technischen Anlage zu reproduzieren,
- einen Sensor (102), der derart eingerichtet ist, eine Prozessgröße (P1) der technischen Anlage (TS) zu erfassen,
- ein Prognosemodul (103), das derart eingerichtet ist, weitere Prozessgrößen (P2) der technischen Anlage in Abhängigkeit der erfassten Prozessgröße (P1) durch Ausführen des computergestützten, dynamischen Modells (CM) zu prognostizieren,
und
- ein Ausgabemodul (104), das derart eingerichtet ist, die prognostizierten Prozessgrößen (P2) zum Steuern eines Start- und/oder Abschaltvorgangs und/oder Lastwechsels der technischen Anlage auszugeben.

2. Vorrichtung nach Anspruch 1, wobei das physikalische, dynamische Modell als Functional-Mock-up-Interface-Modell ausgebildet ist.

3. Vorrichtung nach Anspruch 1 oder 2, wobei das datengetriebene Modell (NN) als ein künstliches neuronales Netz ausgebildet ist.

4. Vorrichtung nach einem der vorhergehenden Ansprüche, wobei das computergestützte, dynamische Modell durch Minimierung einer Verlustfunktion trainiert ist.

5. Vorrichtung nach einem der vorhergehenden Ansprüche, wobei das computergestützte, dynamische Modell mittels eines stochastischen Gradientenabstiegsverfahrens mit Backpropagation trainiert ist.

6. Vorrichtung nach Anspruch 5, wobei Gradienten des datengetriebenen Modells durch automatisches Differenzieren ermitteln werden.

7. Computerimplementiertes Verfahren zum Steuern eines Start- und/oder Abschaltvorgangs und/oder Lastwechsels einer technischen Anlage, umfassend die Verfahrensschritte:
- Bereitstellen (S11) eines computergestützten, dynamischen Modells, wobei das computergestützte, dynamische Modell ein physikalisches, dynamisches Simulationsmodell und ein datengetriebenes Modell umfasst,
wobei das physikalische, dynamische Simulationsmodell lediglich einen Teilaspekt dynamischer Prozesse beim Start- und/oder Abschaltvorgang und/oder beim Lastwechsel der technischen Anlage modelliert und das datengetriebene Modell die übrigen Teilaspekte der dynamischen Prozesse beim Start- und/oder Abschaltvorgang und/oder Lastwechsel modelliert, und wobei das computergestützte, dynamische Modell unter Verwendung von zeitabhängigen Betriebsdaten der technischen Anlage darauf trainiert ist, in Abhängigkeit einer ersten Prozessgröße der technischen Anlage zweite Prozessgrößen der technischen Anlage zu reproduzieren,
- Erfassen (S12) einer Prozessgröße der technischen Anlage,
- Prognostizieren (S13) von weiteren Prozessgrößen der technischen Anlage in Abhängigkeit der erfassten Prozessgröße durch Ausführen des computergestützten, dynamischen Modells,
und
- Ausgeben (S14) der prognostizierten Prozessgrößen zum Steuern eines Start- und/oder Abschaltvorgangs und/oder Lastwechsels der technischen Anlage.

8. Computerimplementiertes Verfahren zum Trainieren eines computergestützten, dynamischen Modells, das zum Steuern eines Start- und/oder Abschaltvorgangs und/oder Lastwechsels einer technischen Anlage geeignet ist, umfassend die Verfahrensschritte:
- Bereitstellen (S21) eines computergestützten, dynamischen Modells, wobei das computergestützte, dynamische Modell ein physikalisches, dynamisches Simulationsmodell und ein datengetriebenes Modell umfasst, wobei das physikalische, dynamische Simulationsmodell lediglich einen Teilaspekt dynamischer Prozesse beim Start- und/oder Abschaltvorgang und/oder beim Lastwechsel der technischen Anlage modelliert und das datengetriebene Modell die übrigen Teilaspekte der dynamischen Prozesse beim Start- und/oder Abschaltvorgang und/oder Lastwechsel modelliert,
- Trainieren (S22) des computergestützten, dynamischen Modells, wobei iterativ
- eine prognostizierte Prozessgröße der technischen Anlage durch Ausführen des computergestützten, dynamischen Modells in Abhängigkeit einer ersten Prozessgröße zu einem vorgegebenen Zeitpunkt ermittelt wird (S221),
- eine Abweichung der prognostizierten Prozessgröße von einer entsprechenden, gemessenen Prozessgröße der technischen Anlage ermittelt wird (S222),
und
- Parameter des datengetriebenen Modells und/oder des physikalischen, dynamischen Simulationsmodells derart konfiguriert werden, dass die Abweichung der prognostizierten Prozessgröße von der gemessenen Prozessgröße minimiert wird (S223),
und
- Bereitstellen (S23) des derart konfigurierten computergestützten, dynamischen Modells zum Steuern der technischen Anlage.

9. Computerprogrammprodukt, das direkt in einen programmierbaren Computer ladbar ist, umfassend Programmcodeteile, die dazu geeignet sind, die Schritte des Verfahrens nach Anspruch 7 oder 8 durchzuführen.
